# EUROPÄISCHE PATENTSCHRIFT

(11) **EP 3 186 013 B1**
(45) Veröffentlichungstag und Bekanntmachung des Hinweises auf die Patenterteilung: **12.09.2018**
(21) Anmeldenummer: 15757437.7
(22) Anmeldetag: 31.07.2015
(51) Int. Cl.: B25J 11/00, B05B 13/04, B25J 5/02, B25J 9/00, B25J 19/00, B25J 21/00, B05B 12/34, B05B 12/26, B05B 16/40

(54) **VORRICHTUNG ZUM BEHANDELN VON GEGENSTÄNDEN**
DEVICE FOR TREATING OBJECTS
DISPOSITIF POUR LE TRAITEMENT D'OBJETS

(30) Priorität: 27.08.2014 DE 102014012595
(43) Veröffentlichungstag der Anmeldung: 05.07.2017
(73) Patentinhaber: Eisenmann SE, 71032 Böblingen (DE)
(72) Erfinder: FRIEDEL, Michael, 71034 Boblingen (DE)
(74) Vertreter: Ostertag & Partner Patentanwälte mbB
(86) Internationale Anmeldenummer: PCT/EP2015/001585
(87) Internationale Veröffentlichungsnummer: WO 2016/029989

(56) Entgegenhaltungen:
- EP-A2- 1 277 521
- WO-A1-2007/014815
- DE-A1-102012 211 135
- DE-C1- 19 820 527
- DE-U1- 29 918 795
- JP-A- H09 239 302

## Beschreibung

Die Erfindung betrifft eine Vorrichtung zum Behandeln von Gegenständen mit
a) einem Behandlungsraum, der mindestens eine Wand mit einem ersten Wandabschnitt und mit einem zweiten Wandabschnitt aufweist, wobei zwischen den Wandabschnitten ein in der Wand verlaufender Spalt ausgebildet ist;
b) wenigstens einer ersten und einer zweiten Arbeitseinrichtung, insbesondere Lackierrobotern, welche jeweils wenigstens eine Komponente umfassen, die sich von einem Außenbereich außerhalb des Behandlungsraumes durch den Spalt in den Behandlungsraum hinein erstreckt, wobei die Arbeitseinrichtungen entlang des Spaltes bewegbar sind;
c) einer Abdeckanordnung, welche den Spalt in der Wand des Behandlungsraumes abdichtet, abgesehen von
   ca) einer ersten Durchgangsöffnung, durch welche sich die wenigstens eine Komponente der ersten Arbeitseinrichtung hindurch erstreckt und welche einer Bewegung der wenigstens einen Komponente der ersten Arbeitseinrichtung entlang des Spaltes folgt;
   cb) einer zweiten Durchgangsöffnung, durch welche sich die wenigstens eine Komponente der zweiten Arbeitseinrichtung hindurch erstreckt und welche einer Bewegung der wenigstens einen Komponente der zweiten Arbeitseinrichtung entlang des Spaltes folgt.

Für die industrielle Behandlung von Gegenständen, insbesondere von Fahrzeugkarosserien oder von deren Teilen, bei der große Stückzahlen umgesetzt werden müssen, kommen bevorzugt Vorrichtungen der eingangs genannten Art zum Einsatz, bei denen die Gegenstände mithilfe einer Fördereinrichtung kontinuierlich oder diskontinuierlich durch den Behandlungsraum geführt werden. Solche Vorrichtungen haben eine hohe Kapazität und lassen sich gut in eine Fertigungslinie eingliedern. Eine Behandlung kann beispielsweise ein Lackieren oder ein Trocknen sein.

Die Wände des Behandlungsraumes trennen diesen von einem Außenbereich und verhindern insbesondere ein Entweichen von gegebenenfalls appliziertem Behandlungsmedium und/oder von Wärme aus dem Behandlungsraum in diesen Außenbereich. Unter dem Begriff Wand können beliebige Teile einer Hülle bzw. eines Gehäuses des Behandlungsraumes verstanden werden, zum Beispiel eine Seitenwand, eine Bodenwand bzw. eine Deckenwand. Eine Wand kann z.B. auch eine Wand eines Gehäuses einer sonstigen Baugruppe sein, welche in dem Behandlungsraum angeordnet ist. Beispielsweise kann die Wand zu dem Gehäuse einer Abdeckung für eine Führungsbahn gehören, auf der eine Arbeitseinrichtung, zum Beispiel ein Applikationsroboter, verfahren wird.

Durch die Wände des Behandlungsraumes und durch deren Abdichtung soll beispielsweise verhindert werden, dass Flüssigkeiten, Gase und/oder Dämpfe aus dem Behandlungsraum entweichen, wie sie zum Beispiel in Lackier- oder Trockenkabinen vorhanden sein können. In Lackierkabinen sollen darüber hinaus zum Beispiel auch Flüssigkeits- bzw. Pulvernebel von der Umgebung des Behandlungsraumes abgehalten werden. Es soll beispielsweise auch verhindert werden, dass Schmutz von außen in den Innenbereich des Behandlungsraumes eindringt.

Unter dem Begriff Abdichten ist vorliegend nicht zwingend eine hermetische Abdichtung der benachbarten Bereiche, d.h. Behandlungsraum und Außenbereich, zu verstehen. Ziel ist es, eine akzeptable Restdurchlässigkeit zu erreichen, die bedarfsgerecht ist und von Anlage zu Anlage unterschiedlich ausfallen kann.

Eine Arbeitseinrichtung kann beispielsweise eine Behandlungseinrichtung und insbesondere ein mehrachsiger Applikations- oder Lackierroboter sein, der an einem Ende eines Roboterarms, das sich im Behandlungsraum befindet, eine Applikationseinrichtung wie z.B. eine Spritzpistole oder einen Rotationszerstäuber führt. Die genannte Arbeitseinrichtung kann beispielsweise auch eine Fördereinrichtung sein und einen Tragarm zum Tragen von Gegenständen aufweisen, der sich im Behandlungsraum befindet. Antriebskomponenten der Fördereinrichtung, von denen üblicherweise Schmutzstoffe ausgehen können, sind vorteilhaft im Außenbereich abseits des Behandlungsraumes angeordnet.

Bekannte Vorrichtungen der eingangs genannten Art sind im Aufbau häufig kompliziert und insbesondere bezogen auf die vorgesehenen Mittel zum Abdichten der Öffnung störungsanfällig.

Die EP 1 277 521 A2 offenbart zum Beispiel ein Abdeckband für eine Gehäuseöffnung einer Beschichtungsanlage, wobei auf einer Schienenkonstruktion der Beschichtungsanlage Schlitten zum Bewegen von Beschichtungsvorrichtungen an einer schlitzartigen Gehäuseöffnung verfahrbar vorgesehen sind. Die Gehäuseöffnung ist dort durch ein am Gehäuse befestigtes stationäres Abdeckband abgedeckt, welches bei der Schlittenbewegung von einer Abhebeeinrichtung des Schlittens von der Gehäuseöffnung abgehoben wird. Bei diesem stationären Abdeckband kann eine Reinigung des mit Verunreinigungen aus dem Behandlungsraum beschmutzten Abdeckbandes nur von der Seite des Behandlungsraumes her erfolgen.

Eine weitere Abdeckvorrichtung für eine Kabine, insbesondere eine Lackierkabine, wird in der DE 10 2012 211 135 A1 beschrieben. Dort weist die Abdeckvorrichtung für eine sich in eine Längsrichtung erstreckende schlitzförmige Öffnung in einer Wand einer Kabine eine Vielzahl von Dichtungselementen auf, welche die Öffnung überdeckend entlang der Längsrichtung aufeinanderfolgend angeordnet sind. Die Dichtungselemente sind an einer zu der Wand ortsfesten Halteeinrichtung aufgenommen, wobei die Dichtungselemente an der Halteeinrichtung schwenkbeweglich gelagert sind. Hier ist der mechanische Aufwand sehr groß.

Aufgabe der vorliegenden Erfindung ist es, eine Vorrichtung der eingangs genannten Art bereitzustellen, die hinsichtlich ihrer Realisierung und Wartung möglichst einfach ausgestaltet ist und bei der die Nachteile des Standes der Technik vermieden werden.

Diese Aufgabe wird bei einer Vorrichtung der eingangs genannten Art dadurch gelöst, dass
d) die Abdeckanordnung ein am Spalt verlaufendes Abdeckband umfasst, welches an einer ersten Befestigungsseite und an einer zweiten Befestigungsseite der ersten Arbeitseinrichtung befestigt ist, wobei die beiden Befestigungsseiten sich in Längsrichtung des Spaltes gegenüberliegen;
   wobei
e) das Abdeckband mittels einer Umlenkeinrichtung von der ersten Befestigungsseite zur zweiten Befestigungsseite der ersten Arbeitseinrichtung geführt wird;
f) das Abdeckband von der ersten Befestigungsseite der ersten Arbeitseinrichtung zu der zweiten Arbeitseinrichtung geführt wird, wo es mittels einer Abhebeeinrichtung von dem Spalt abgehoben und an der zweiten Arbeitseinrichtung vorbei geführt wird.

Durch diese erfindungsgemäßen Maßnahmen ist das Abdeckband nicht stationär, da es bei einer Bewegung der ersten Arbeitseinrichtung verschoben wird. Daher können Abschnitte des Abdeckbandes, welche aus dem Behandlungsraum verunreinigt wurden, insbesondere durch eine Bewegung der ersten Arbeitseinrichtung, von dem Spalt weggeführt werden, beispielsweise in den Außenbereich. Dort kann dann eine Reinigung erfolgen, ohne dass dazu der Behandlungsraum betreten werden muss, wozu der Betrieb eingestellt werden müsste. Beispielsweise kann dann im Außenbereich eine automatische Reinigungsvorrichtung installiert sein, durch welche das Abdeckband geführt und dabei gereinigt werden kann.

Darüber hinaus kann eine ausreichende Abdeckung und Abdichtung des Spaltes mit einem einzigen Abdeckband erreicht werden.

Es ist günstig, wenn das Abdeckband an beiden Befestigungsseiten an der ersten Arbeitseinrichtung befestigt ist. Auf diese Weise kann auf eine gesondert beweglich gelagerte Befestigungseinrichtung für das Abdeckband an der ersten Arbeitseinrichtung verzichtet werden.

Es ist besonders vorteilhaft, wenn die Umlenkeinrichtung in dem Außenbereich angeordnet ist. In diesem Fall besteht keine Gefahr einer Kontamination der Abschnitte des Abdeckbandes, die sich nicht am Spalt befinden.

Vorzugsweise umfasst die Umlenkeinrichtung mehrere Umlenkeinheiten für das Abdeckband, so dass dieses sicher geführt und umgelenkt werden kann.

In der Praxis hat es sich hierbei als günstig herausgestellt, wenn die Umlenkeinheiten jeweils eine Umlenkrolle oder eine Umlenkfläche für das Abdeckband umfassen.

Besonders vorteilhaft ist es, wenn die Abhebeeinrichtung von der zweiten Arbeitseinrichtung getragen ist.

Um auch bei der Abhebeeinrichtung eine sichere Führung des Abdeckbandes sicherzustellen, umfasst die Abhebeeinrichtung vorzugsweise mehrere Abhebe-Umlenkeinheiten.

Dabei ist es günstig, wenn die Abhebe-Umlenkeinheiten jeweils eine Umlenkrolle oder eine Umlenkfläche für das Abdeckband umfassen.

Wenn der erste und der zweite Wandabschnitt in einer vertikalen Ebene verlaufen, so dass auch der Spalt in einer vertikalen Ebene verläuft, wird einer häufig anzutreffenden Anordnung von Arbeitseinrichtungen Rechnung getragen.

Alternativ können der erste und der zweite Wandabschnitt von einem horizontalen Wandteil der Wand umfasst sein, so dass auch der Spalt in einer horizontalen Ebene verläuft. Wenn die den Spalt durchdringenden Komponenten der Arbeitseinrichtungen sich nach unten durch diesen Spalt hindurch erstreckt, gibt es eine Art Abschattung des Spaltes durch die Wand, wodurch der Kontakt zu Verunreinigungen im Behandlungsraum bereits etwas vermindert ist.

Nachfolgend werden Ausführungsbeispiele der Erfindung anhand der Zeichnungen näher erläutert. In diesen zeigen:
- Figur 1: perspektivisch einen Ausschnitt einer Lackierkabine gemäß einem ersten Ausführungsbeispiel mit einer Kabinenwand, bei der ein Spalt zwischen zwei vertikalen Wandabschnitten verläuft, durch welchen sich zwei Arbeitseinrichtungen hindurch in einen Behandlungsraum hinein erstrecken, wobei der Spalt durch eine Abdeckanordnung abgedeckt ist;
- Figur 2: den Ausschnitt von Figur 1, wobei die Wand durchscheinend gezeigt ist;
- Figur 3: perspektivisch einen Ausschnitt einer Lackierkabine gemäß einem zweiten Ausführungsbeispiel mit einer Kabinenwand, bei der ein Spalt zwischen zwei horizontalen Wandabschnitten verläuft, durch welchen sich zwei Arbeitseinrichtungen hindurch in den Behandlungsraum hinein erstrecken, wobei der Spalt durch eine Abdeckanordnung abgedeckt ist;
- Figur 4: den Ausschnitt von Figur 3, wobei die Wand durchscheinend gezeigt ist.

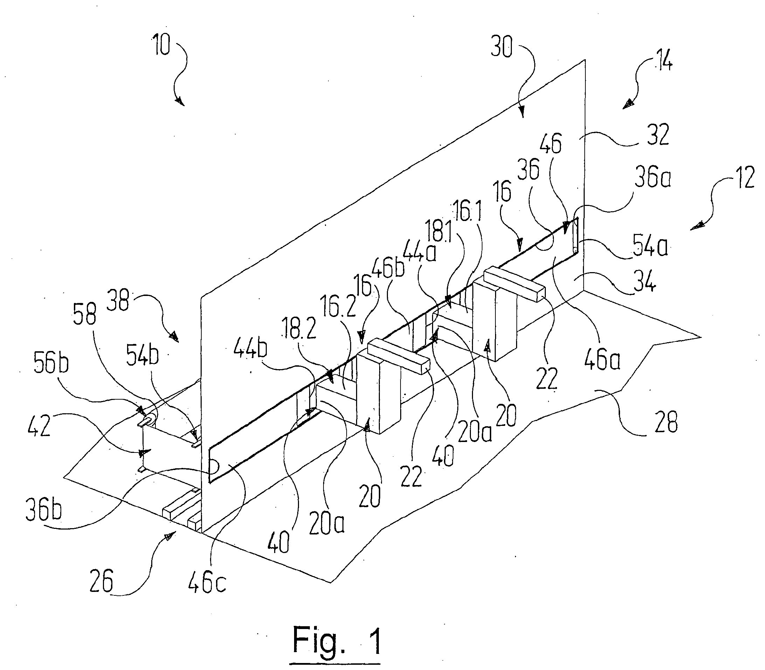

In Figur 1 ist mit 10 insgesamt eine Vorrichtung zum Behandeln von Gegenständen bezeichnet, welche einen Behandlungsraum 12 umfasst. Beim vorliegenden Ausführungsbeispiel gehört der Behandlungsraum 12 zu einer Lackierkabine 14, in welcher Gegenstände lackiert werden und von welcher lediglich ein Ausschnitt gezeigt ist.

In dem Behandlungsraum 12 sind zwei Arbeitseinrichtungen 16, die beim vorliegenden Ausführungsbeispiel als Behandlungseinrichtungen 16.1 und 16.2 ausgebildet sind. Die Behandlungseinrichtungen 16.1, 16.2 werden jeweils durch einen stark schematisch dargestellten, mehrachsigen Lackierroboter 18.1 bzw. 18.2 veranschaulicht, wie er an und für sich bekannt ist.

Jeder Lackierroboter 18.1, 18.2 umfasst einen Roboterarm 20, der an seinem freien Ende eine Applikationseinrichtung 22 führt, bei der es sich beispielsweise um eine Spritzpistole oder einen Rotationszerstäuber handeln kann.

Der Roboterarm 20 ist auf einem Schlitten 24 angeordnet, der auf Schienen 26 in dem Behandlungsraum 12 verfahren werden kann und zu diesem Zweck in bekannter Art und Weise Antriebskomponenten mit sich führt, die hier nicht gesondert gezeigt sind.

Der Behandlungsraum 12 ist durch Wände begrenzt, von denen eine Bodenwand 28 und eine vertikale Seitenwand 30 zu erkennen sind. Die Seitenwand 30 hat einen ersten Wandabschnitt 32 und einen zweiten Wandabschnitt 34, die durch einen in horizontale Richtung verlaufenden Spalt 36 mit einer Längsrichtung voneinander getrennt sind.

Beim vorliegenden Ausführungsbeispiel verlaufen der erste Wandabschnitt 32 und der zweite Wandabschnitt 34 in einer vertikalen Ebene, wodurch sich auch der Spalt 36 in einer vertikalen Ebene erstreckt.

Auf der vom Behandlungsraum 12 abliegenden Seite der Seitenwand 30 befindet sich ein Außenbereich 38 außerhalb des Behandlungsraums 12 der Lackierkabine 14, von dem aus der Lackierroboter 18 mit Betriebsmitteln wie elektrischer Energie, fluiden Medien und dergleichen versorgt wird, die zum Betrieb des Lackierroboters 18 und zum Lackieren der Gegenstände notwendig sind. Hierfür werden nicht eigens gezeigte Versorgungsleitungen zu dem Lackierroboter 18 geführt, wie es an und für sich bekannt ist.

Der Spalt 36 ist derart ausgebildet, dass solche Leitungen und/oder Bauteile von dem Außenbereich 38 durch den Spalt 36 hindurch in den Behandlungsraum 12 der Lackierkabine 14 geführt werden können. Insbesondere können bewegte Leitungen und/oder Bauteile durch den Spalt 36 geführt werden.

Beim vorliegenden Ausführungsbeispiel sind die Schienen 26 und der Schlitten 24 des Lackierroboters 14 in dem Außenbereich 38 angeordnet. Von dem Schlitten 24 ausgehend erstreckt sich jeweils eine Komponente 40 der Arbeitseinrichtungen 16 durch den Spalt 36 hindurch in den Behandlungsraum 12 hinein. Diese Komponente 40 ist beim vorliegenden Ausführungsbeispiel durch einen Armabschnitt 20a des Roboterarmes 20 gebildet. Durch diesen Armabschnitt 20a können auch Leitungen in den Behandlungsraum 12 geführt sein, die zum Betrieb des jeweiligen Lackierroboters 18.1, 18.2 erforderlich sind.

Bei einer nicht eigens gezeigten Abwandlung können die Schienen 26 auch in dem Behandlungsraum 12 angeordnet sein, so dass sich die Lackierroboter 18.1, 18.2 vollständig im Behandlungsraum 12 befinden. In diesem Fall kann es sich bei der durch den Spalt 36 geführten Komponente 40 beispielsweise um ein Leitungsbündel für die oben angesprochene Versorgung der Lackierroboter 18.1, 18.2 handeln, die dann aus dem Außenbereich 38 zum jeweiligen Lackierroboter 18.1, 18.2 im Behandlungsraum 12 geführt werden.

Wie eingangs erläutert, soll weitgehend verhindert werden, dass Atmosphäre aus dem Behandlungsraum 12 in den Außenbereich 38 oder aus diesem in den Behandlungsraum 12 gelangt. Aus diesem Grund ist eine Abdeckanordnung 42 vorhanden, welche den Spalt 36 in der Seitenwand 30 des Behandlungsraumes 12 abdeckt und dadurch abdichtet, abgesehen von einer ersten Durchgangsöffnung 44a, durch welche sich der Armabschnitt 20a des ersten Lackierroboters 18.1 hindurch erstreckt. Die Durchgangsöffnung 44a folgt einer Bewegung dieses Armabschnitts 20a entlang des Spaltes 36. Die Abdeckung und Abdichtung des Spaltes 36 besteht außerdem auch abgesehen von einer zweiten Durchgangsöffnung 44b, durch welche sich der Armabschnitt 20a des zweiten Lackierroboters 18.2 hindurch erstreckt; die zweite Durchgangsöffnung 44b folgt einer Bewegung des Armabschnittes 20a des zweiten Lackierroboters 18.2 entlang des Spaltes 36.

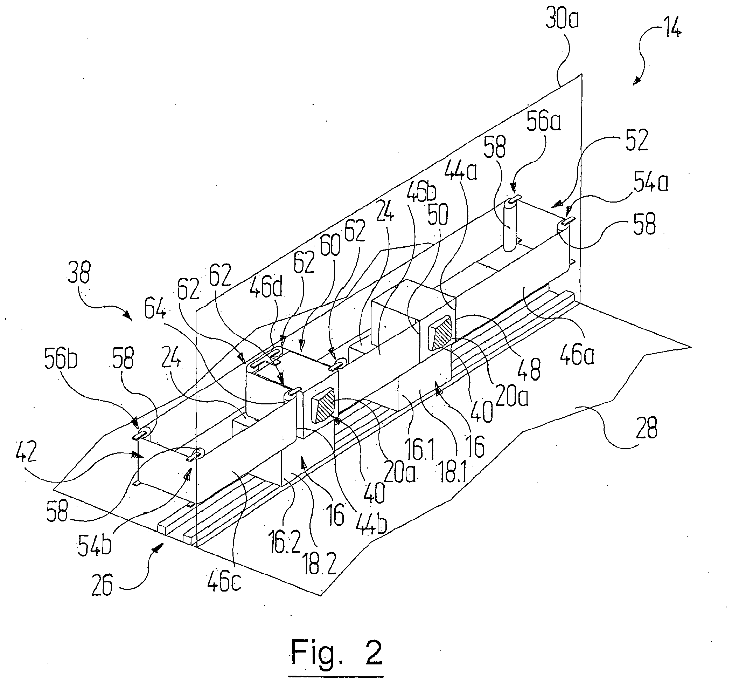

In Figur 2 ist von der Seitenwand 30 lediglich ein Außenumriss 30a angedeutet, so dass der Außenbereich 38 der Lackierkabine 14 hinter der Seitenwand 30 einsehbar ist.

Wie dort zu erkennen ist, umfasst die Abdeckanordnung 42 ein am Spalt 36 verlaufendes Abdeckband 46, welches mit einem ersten Ende an einer ersten Befestigungsseite 48 und mit seinem zweiten Ende an einer zweiten Befestigungsseite 50 der ersten Arbeitseinrichtung 16.1, d.h. hier dem ersten Lackierroboter 18.1, in einer Abdeckposition befestigt ist, wobei die beiden Befestigungsseiten 48, 50 sich in Längsrichtung des Spaltes 36 gegenüberliegen. Abdeckposition bedeutet hier, dass das Abdeckband 46 ausreichend nahe am Spalt 36 verläuft, um eine genügende Abdeckung und Abdichtung sicherzustellen. Die Befestigungsseiten 48, 50 befinden sich im Außenbereich 38 der Lackierkabine 14. Beim vorliegenden Ausführungsbeispiel ist das Abdeckband 46 an den Befestigungsseiten 48, 50 jeweils an dem ersten Lackierroboter 18.1 befestigt und dort an dessen Schlitten 24 fixiert.

Bei einer nicht eigens gezeigten Abwandlung kann das Abdeckband 46 auch durch eine Befestigungseinrichtung an den beiden Befestigungsseiten 48, 50 der ersten Arbeitseinrichtung 16.1 befestigt sein, die als separate Baueinheit ausgebildet ist und beispielsweise mittels einer eigenen Schienenführung gesondert gelagert ist und darauf mit dem ersten Lackierroboter 18.1 mitgeführt wird.

Das Abdeckband 46 ist beweglich gelagert und nicht stationär fixiert. Das Abdeckband 46 ist das einzige vorhandene Abdeckband und als zwischen den Befestigungsseiten 48 und 50 umlaufendes Abdeckband konzipiert.

Damit der Spalt 36 nun zuverlässig abgedeckt ist, wird das Abdeckband 46 über eine Umlenkeinrichtung 52 von der ersten Befestigungsseite 48 zur zweiten Befestigungsseite 48 geführt. Die Umlenkeinrichtung 52 ist in dem Außenbereich 38 angeordnet, wo auch das Abdeckband 46 vollständig verläuft.

Die Umlenkeinrichtung 52 umfasst zwei Positionsumlenkeinheiten 54a, 54b an den mit 36a und 36b bezeichneten Längesenden des Spaltes 36, durch welche das Abdeckband 46 in einer Abdeckposition an dem Spalt 36 geführt ist. Außerdem umfasst die Umlenkeinrichtung 52 weitere Umlenkeinheiten 56, durch welche das Abdeckband 46 im Außenbereich 38 auf der von der Seitenwand 30 abliegenden Seite hinter den Arbeitseinrichtungen 16.1, 16.2 entlang geführt ist. Beim vorliegenden Ausführungsbeispiel sind zwei solcher Umlenkeinheiten 56a, 56b vorhanden.

Von den Positionsumlenkeinheiten 54a, 54b und den weiteren Umlenkeinheiten 56a, 56b ist wenigstens eine als Spannstation ausgebildet, so dass das Abdeckband 46 stets unter einer Arbeitsspannung gehalten ist. Eine entsprechende Vorspannung kann durch passive Vorrichtungen, wie Federelemente, gewichtsbelastete Einrichtungen oder dergleichen erzeugt werden. Dabei wird die auf das Abdeckband 46 wirkende Vorspannkraft auf diejenigen Kräfte abgestimmt, die bei der Beschleunigung des Abdeckbandes 46 an der Spannstation auftreten, wenn eine oder alle vorhandenen Arbeitseinrichtungen 16 bewegt werden. Hierdurch wird ein Reißen des Abdeckbandes verhindert.

Darüber hinaus kann eine entsprechende Vorspannung auch durch aktive Vorspanneinrichtungen bewirkt werden, bei denen die auf das Abdeckband wirkende Vorspannkraft im laufenden Betrieb geändert werden kann. Hierfür sind beispielsweise hydraulische, pneumatische oder motorisch betriebene Systeme geeignet. In diesem Fall kann die Vorspannung an die bekannten oder vorher ermittelten Beschleunigungswerte der Arbeitseinrichtungen 16 angepasst werden. Zum Beispiel kann die Vorspannung aktiv verringert werden, wenn eine Arbeitseinrichtung 16 eine schnelle Bewegung durchführen soll, bei der Abdeckband 46 aus dem Abdeckbereich herausbewegt wird, so dass das Abdeckband 46 bei seiner Bewegung nur wenig Widerstand erfährt.

In dem Bereich des Abdeckbandes 46 zwischen diesen Umlenkeinheiten 56a, 56b kann das Abdeckband beispielsweise durch eine oben angesprochene automatische, hier nicht eigens gezeigte Reinigungsvorrichtung geführt und ein- oder beidseitig gereinigt werden.

Die Umlenkeinheiten 54 und 56 umfassen beim vorliegenden Ausführungsbeispiel drehbar gelagerte Umlenkrollen 58, an welchen das Abdeckband 46 abrollen kann. Statt solcher Umlenkrollen 58 können jedoch auch stationäre Umlenkflächen ausreichend sein, über welche das Abdeckband 46 an den Umlenkeinheiten 56 hinweg gleitet.

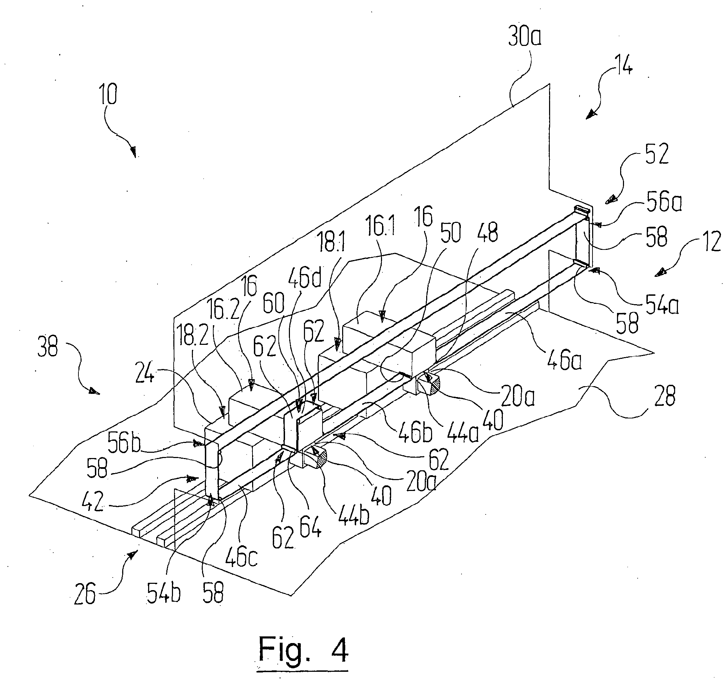

Das Abdeckband 46 wird von der ersten Befestigungsseite 48 des ersten Lackierroboters 18.1 zu dem zweiten Lackierroboter 18.2 geführt, wo es mittels einer Abhebeeinrichtung 60 von dem Spalt 36 abgehoben und an dem zweiten Lackierroboter 18.2 vorbei geführt wird. Die Abhebeeinrichtung 60 ist von dem zweiten Lackierroboter 18.2 mitgeführt und umfasst mehrere von diesem getragene Abhebe-Umlenkeinheiten 62. Beim vorliegenden Ausführungsbeispiel ist die Abhebeeinrichtung 60 am Schlitten 24 des zweiten Lackierroboters 18.2 angeordnet, wobei die Abhebe-Umlenkeinheiten 62 entlang der Außenkontur von dessen Schlitten 24 positioniert sind. Die Abhebe-Umlenkeinheiten 62 der Abhebeinrichtung 60 umfassen drehbar gelagerte Umlenkrollen 64, von denen in den Figuren 2 und 4 nur jeweils eine ein Bezugszeichen trägt. Von der Abhebeeinrichtung 60 verläuft das Abdeckband 46 zur zweiten Befestigungsseite 50 des ersten Lackierroboters 18.2. Auch hier können statt solcher Umlenkrollen 64 auch stationäre Umlenkflächen ausreichend sein, über welche das Abdeckband 46 an den Abhebe-Umlenkeinheiten 62 hinweg gleitet.

Bei einer nicht eigens gezeigten Abwandlung kann die Abhebeeinrichtung auch nicht von dem zweiten Lackierroboter 18.2 getragen sein, sondern als separate und gesondert beweglich gelagerte Baueinheit ausgebildet sein, die beispielsweise mittels einer eigenen Schienenführung der Bewegung des zweiten Lackierroboter 18.2 folgen und so mit diesem mitgeführt werden kann.

Das Abdeckband 46 weist in der Abdeckanordnung 42 verschiedene Abdeckabschnitte 46a, 46b und 46c und einen Abhebeabschnitt 46d auf. Ein erster Abdeckabschnitt 46a erstreckt sich von der Positions-Umlenkeinheit 54a am ersten Längsende 36a des Spaltes 36 bis zur ersten Befestigungsseite 48 am ersten Lackierroboter 18.1. Ein zweiter Abdeckabschnitt 46b erstreckt sich von der zweiten Befestigungsseiten 50 des ersten Lackierroboters 18.1 bis zum zweiten Lackierroboter 18.2, wo es von der Abhebeeinrichtung 60 aufgenommen wird. Ein dritter Abdeckabschnitt 46c des Abdeckbandes 46 erstreckt sich dann vom zweiten Lackierroboter 18.2, von dem es aus der Abhebeeinrichtung 60 ausläuft, bis zur zweiten. Positions-Umlenkeinheit 54b am zweiten Längsende 36b des Spaltes 36. Der Abschnitt des Abdeckbandes 46, der von der Abhebeeinrichtung 60 aufgenommen ist, definiert den Abhebeabschnitt 46d; dieser befindet sich zwischen den Abdeckabschnitten 46b und 46c.

Wenn nun der erste Lackierroboter 18.1 beispielsweise stillsteht und sich der zweite Lackierroboter 18.2 auf den ersten Lackierroboter 18.1 zu bewegt, verschiebt sich der von der Abhebeeinrichtung 60 geführte Abhebeabschnitt 46d, wobei sich der Abdeckabschnitt 46b zwischen den Lackierrobotern 18.1, 18.2 verkürzt, wogegen sich der Abdeckabschnitt 46c zwischen dem zweiten Lackierroboter 18.2 und dem zweiten Längsende 36b des Spaltes 36 verlängert.

Wenn der erste Lackierroboter 18.1 stillsteht, wird der am Spalt 36 sichtbare Teil des Abdeckbandes 46 grundsätzlich nicht in Längsrichtung des Spalts 36 bewegt; lediglich sein Abhebeabschnitt 46d wird verlagert.

Wenn sich dagegen der erste Lackierroboter 18.1 entlang des Spaltes 36 bewegt, wird auch das Abdeckband 46 in gleicher Weise am Spalt entlang bewegt.

Die anhand der Figuren 1 und 2 erläuterte Abdeckanordnung 42 kann auch bei anders als in horizontaler Richtung und in einer vertikalen Ebene verlaufenden Spalten genutzt werden.

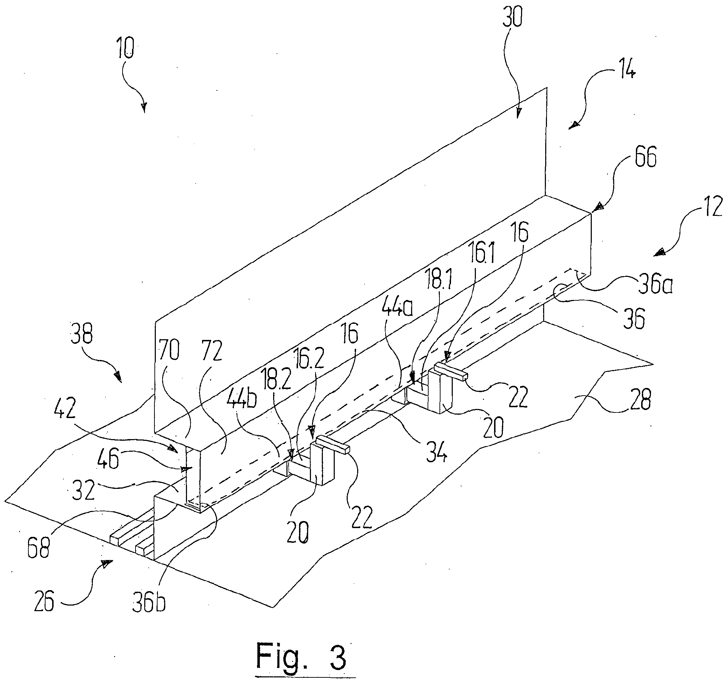

In den Figuren 3 und 4 ist als zweites Ausführungsbeispiel einer Behandlungskabine 12 mit einer Seitenwand 30 gezeigt, bei welcher der Spalt 36 in einer horizontalen Ebene verläuft; in diesem Fall ist die Richtung des Spaltes 36 immer horizontal. Funktional einander entsprechende Komponenten tragen in den Figuren 3 und 4 dieselben Bezugszeichen wie in den Figuren 1 und 2.

Dort hat die Seitenwand 30 eine Ausbuchtung 66 in den Behandlungsraum 12 hinein, die durch ein unteres und ein obere horizontales Wandteil 68 und 70 gebildet ist, die durch ein vertikales Wandteil 72 miteinander verbunden sind.

Der erste Wandabschnitt 32 ist dort ein Wandabschnitt des unteren horizontalen Wandteils 68, der dem Außenbereich 38 zugewandt ist, und der zweite Wandabschnitt 34 ist dort ein dem Behandlungsraum 12 zugewandet Wandabschnitt des unteren horizontalen Wandteils 68, wodurch der Spalt 36 sich in einer horizontalen Ebene erstreckt. In Figur 3 ist der der Spalt 36 in Durchsicht der Seitenwand 30 gestrichelt dargestellt. In Figur 4 ist wieder nur der Außenumriss 30a der Seitenwand 30 gezeigt. Ebenso ist nur eine Umlenkrolle 64 bei einer Abhebe-Umlenkeinheit 62 mit einem Bezugzeichen versehen.

Die Komponenten 40 der beiden Arbeitseinrichtungen 16.1, 16.2, die sich aus dem Außenbereich 38 durch den Spalt 36 in den Behandlungsraum 12 hinein erstrecken, verlaufen beim vorliegenden Ausführungsbeispiel von oben nach unten und sind lediglich in Figur 4 zu erkennen. Ein Teil 74 der Lackierroboter 18.1 und 18.2 ist dabei in der Ausbuchtung 66 angesiedelt; von diesem Teil 74 ragt der Roboterarm 20 nach unten ab.

Ansonsten gilt das oben zur Behandlungsvorrichtung 10 nach den Figuren 1 und 2 Gesagte sinngemäß entsprechend.

Bei den oben erläuterten Ausführungsbeispielen sind jeweils zwei Arbeitseinrichtungen 16 gezeigt. Die Behandlungsvorrichtung 10 kann jedoch auch mehr als zwei Arbeitseinrichtungen 16 aufweisen, von denen dann mehrere eine Abhebeeinrichtung 60 wie bei der Arbeitseinrichtung 16.2 mit sich führen. Dabei können auch verschiedene Arbeitseinrichtungen 16 vorhanden sein, beispielsweise zwei Lackierroboter und zwei Handhabungsroboter oder dergleichen, wenn vier Arbeitseinrichtungen 16 vorgesehen sind.

## Patentansprüche

1. Vorrichtung zum Behandeln von Gegenständen mit
a) einem Behandlungsraum (12), der mindestens eine Wand (30) mit einem ersten Wandabschnitt (32) und mit einem zweiten Wandabschnitt (34) aufweist, wobei zwischen den Wandabschnitten (32, 34) ein in der Wand (30) verlaufender Spalt (36) ausgebildet ist;
b) wenigstens einer ersten und einer zweiten Arbeitseinrichtung (16.1, 16.2), insbesondere Lackierrobotern (18.1, 18.2), welche jeweils wenigstens eine Komponente (40) umfassen, die sich von einem Außenbereich (38) außerhalb des Behandlungsraumes (12) durch den Spalt (36) in den Behandlungsraum (12) hinein erstreckt, wobei die Arbeitseinrichtungen (16) entlang des Spaltes (36) bewegbar sind;
c) einer Abdeckanordnung (42), welche den Spalt (36) in der Wand (30) des Behandlungsraumes (12) abdichtet, abgesehen von
ca) einer ersten Durchgangsöffnung (44a), durch welche sich die wenigstens eine Komponente (40) der ersten Arbeitseinrichtung (16.1) hindurch erstreckt und welche einer Bewegung der wenigstens einen Komponente (40) der ersten Arbeitseinrichtung (16.1) entlang des Spaltes (36) folgt;
cb) einer zweiten Durchgangsöffnung (44b), durch welche sich die wenigstens eine Komponente (40) der zweiten Arbeitseinrichtung (16.2) hindurch erstreckt und welche einer Bewegung der wenigstens einen Komponente (40) der zweiten Arbeitseinrichtung (16.2) entlang des Spaltes (36) folgt,
**dadurch gekennzeichnet, dass**
d) die Abdeckanordnung (42) ein am Spalt (36) verlaufendes Abdeckband (46) umfasst, welches an einer ersten Befestigungsseite (48) und an einer zweiten Befestigungsseite (50) der ersten Arbeitseinrichtung (16.1) befestigt ist, wobei die beiden Befestigungsseiten (48, 50) sich in Längsrichtung des Spaltes (36) gegenüberliegen;
wobei
e) das Abdeckband (46) mittels einer Umlenkeinrichtung (52) von der ersten Befestigungsseite (48) zur zweiten Befestigungsseite (50) der ersten Arbeitseinrichtung (16.1) geführt wird;
f) das Abdeckband (46) von der ersten Befestigungsseite (48) der ersten Arbeitseinrichtung (16.1) zu der zweiten Arbeitseinrichtung (16.2) geführt wird, wo es mittels einer Abhebeeinrichtung (60) von dem Spalt (36) abgehoben und an der zweiten Arbeitseinrichtung (16.2) vorbei geführt wird.

2. Vorrichtung nach Anspruch 1, **dadurch gekennzeichnet, dass** das Abdeckband (46) an beiden Befestigungsseiten (48, 50) an der ersten Arbeitseinrichtung (16.1) befestigt ist.

3. Vorrichtung nach Anspruch 1 oder 2, **dadurch gekennzeichnet, dass** die Umlenkeinrichtung (52) in dem Außenbereich (38) angeordnet ist.

4. Vorrichtung nach einem der Ansprüche 1 bis 3, **dadurch gekennzeichnet, dass** die Umlenkeinrichtung (52) mehrere Umlenkeinheiten (54a, 54b, 56) umfasst.

5. Vorrichtung nach Anspruch 4, **dadurch gekennzeichnet, dass** die Umlenkeinheiten (54a, 54b, 56) jeweils eine Umlenkrolle (58) oder eine Umlenkfläche für das Abdeckband (46) umfassen.

6. Vorrichtung nach einem der Ansprüche 1 bis 5, **dadurch gekennzeichnet, dass** die Abhebeeinrichtung (60) von der zweiten Arbeitseinrichtung (16.2) getragen ist.

7. Vorrichtung nach einem der Ansprüche 1 bis 6, **dadurch gekennzeichnet, dass** die Abhebeeinrichtung (60) mehrere Abhebe-Umlenkeinheiten (62) umfasst.

8. Vorrichtung nach Anspruch 7, **dadurch gekennzeichnet, dass** die Abhebe-Umlenkeinheiten (62) jeweils eine Umlenkrolle (64) oder eine Umlenkfläche für das Abdeckband (46) umfassen.

9. Vorrichtung nach einem der Ansprüche 1 bis 8, **dadurch gekennzeichnet, dass** der erste und der zweite Wandabschnitt (32, 34) in einer vertikalen Ebene verlaufen, so dass auch der Spalt (36) in einer vertikalen Ebene verläuft.

10. Vorrichtung nach einem der Ansprüche 1 bis 8, **dadurch gekennzeichnet, dass** der erste und der zweite Wandabschnitt (32, 34) von einem horizontalen Wandteil (68) der Wand (30) umfasst sind, so dass auch der Spalt (36) in einer horizontalen Ebene verläuft.

## Claims

1. A device for treating objects, having
a) a treatment chamber (12), which has at least one wall (30) having a first wall section (32) and having a second wall section (34), wherein a gap (36) extending in the wall (30) is formed between the wall sections (32, 34);
b) at least one first and one second working unit (16.1, 16.2), in particular painting robots (18.1, 18.2), which each comprise at least one component (40) which extends from an outer region (38) outside the treatment chamber (12) though the gap (36) into the treatment chamber (12), wherein the working units (16) can be moved along the gap (36);
c) a covering assembly (42), which seals the gap (36) in the wall (30) of the treatment chamber (12), apart from
ca) a first through opening (44a), through which the at least one component (40) of the first working unit (16.1) extends and which follows a movement of the at least one component (40) of the first working unit (16.1) along the gap (36);
cb) a second through opening (44b), through which the at least one component (40) of the second working unit (16.2) extends and which follows a movement of the at least one component (40) of the second working unit (16.2) along the gap (36),
**characterized in that**
d) the covering assembly (42) comprises a covering band (46), which extends at the gap (36) and which is fastened on a first fastening side (48) and on a second fastening side (50) of the first working unit (16.1), wherein the two fastening sides (48, 50) lie opposite one another in the longitudinal direction of the gap (36);
wherein
e) the covering band (46) is guided by means of a deflection device (52) from the first fastening side (48) to the second fastening side (50) of the first working unit (16.1);
f) the covering band (46) is guided from the first fastening side (48) of the first working unit (16.1) to the second working unit (16.2), where it is lifted away from the gap (36) by means of a lifting device (60) and guided past the second working unit (16.2).

2. The device according to Claim 1, **characterized in that** the covering band (46) is fastened on the first working unit (16.1) on both fastening sides (48, 50).

3. The device according to Claim 1 or 2, **characterized in that** the deflection device (52) is arranged in the outer region (38).

4. The device according to one of Claims 1 to 3, **characterized in that** the deflection device (52) comprises a plurality of deflection units (54a, 54b, 56).

5. The device according to Claim 4, **characterized in that** the deflection units (54a, 54b, 56) each comprise a deflection roller (58) or a deflection surface for the covering band (46).

6. The device according to one of Claims 1 to 5, **characterized in that** the lifting device (60) is supported by the second working unit (16.2).

7. The device according to one of Claims 1 to 6, **characterized in that** the lifting device (60) comprises a plurality of lifting/deflection units (62).

8. The device according to Claim 7, **characterized in that** the lifting/deflection units (62) each comprise a deflection roller (64) or a deflection surface for the covering band (46).

9. The device according to one of Claims 1 to 8, **characterized in that** the first and the second wall section (32, 34) extend in a vertical plane, with the result that the gap (36) also extends in a vertical plane.

10. The device according to one of Claims 1 to 8, **characterized in that** the first and the second wall section (32, 34) are comprised by a horizontal wall part (68) of the wall (30), with the result that the gap (36) also extends in a horizontal plane.

## Revendications

1. Dispositif pour le traitement d'objets, avec
a) une chambre de traitement (12), qui présente au moins une paroi (30) avec une première partie de paroi (32) et une seconde partie de paroi (34), dans lequel une fente (36) s'étendant dans la paroi (30) est formée entre les parties de paroi (32, 34);
b) au moins un premier et un second dispositifs de travail (16.1, 16.2), en particulier des robots de peinture (18.1, 18.2), qui comprennent respectivement au moins un composant (40), qui s'étend d'une région extérieure (38) à l'extérieur de la chambre de traitement (12) à travers la fente (36) jusqu'à l'intérieur de la chambre de traitement (12), dans lequel les dispositifs de travail (16) sont déplaçables le long de la fente (36);
c) un agencement de recouvrement (42), qui ferme de façon étanche la fente (36) dans la paroi (30) de la chambre de traitement (12), abstraction faite de
ca) une première ouverture de passage (44a), à travers laquelle ledit au moins un composant (40) du premier dispositif de travail (16.1) s'étend et qui suit un mouvement dudit au moins un composant (40) du premier dispositif de travail (16.1) le long de la fente (36);
cb) une seconde ouverture de passage (44b), à travers laquelle ledit au moins un composant (40) du second dispositif de travail (16.2) s'étend et qui suit un mouvement dudit au moins un composant (40) du second dispositif de travail (16.2) le long de la fente (36),
**caractérisé en ce que**
d) l'agencement de recouvrement (42) comprend une bande de recouvrement (46) s'étendant sur la fente (36), qui est fixée à un premier côté de fixation (48) et à un second côté de fixation (50) du premier dispositif de travail (16.1), dans lequel les deux côtés de fixation (48, 50) sont opposés l'un à l'autre dans la direction longitudinale de la fente (36),
dans lequel
e) la bande de recouvrement (46) est guidée du premier côté de fixation (48) au second côté de fixation (50) du premier dispositif de travail (16.1) au moyen d'un dispositif de déviation (52);
f) la bande de recouvrement (46) est guidée du premier côté de fixation (48) du premier dispositif de travail (16.1) au second dispositif de travail (16.2), où elle est soulevée de la fente (36) au moyen d'un dispositif de soulèvement (60) et est guidée le long du second dispositif de travail (16.2).

2. Dispositif selon la revendication 1, **caractérisé en ce que** la bande de recouvrement (46) est fixée sur les deux côtés de fixation (48, 50) au premier dispositif de travail (16.1).

3. Dispositif selon la revendication 1 ou 2, **caractérisé en ce que** le dispositif de déviation (52) est disposé dans la région extérieure (38).

4. Dispositif selon l'une quelconque des revendications 1 à 3, **caractérisé en ce que** le dispositif de déviation (52) comprend plusieurs unités de déviation (54a, 54b, 56).

5. Dispositif selon la revendication 4, **caractérisé en ce que** les unités de déviation (54a, 54b, 56) comprennent respectivement un rouleau de déviation (58) ou une face de déviation pour la bande de recouvrement (46).

6. Dispositif selon l'une quelconque des revendications 1 à 5, **caractérisé en ce que** le dispositif de soulèvement (60) est porté par le second dispositif de travail (16.2).

7. Dispositif selon l'une quelconque des revendications 1 à 6, **caractérisé en ce que** le dispositif de soulèvement (60) comprend plusieurs unités de soulèvement-déviation (62)

8. Dispositif selon la revendication 7, **caractérisé en ce que** les unités de soulèvement-déviation (62) comprennent respectivement un rouleau de déviation (64) ou une face de déviation pour la bande de recouvrement (46) .

9. Dispositif selon l'une quelconque des revendications 1 à 8, **caractérisé en ce que** la première et la seconde parties de paroi (32, 34) s'étendent dans un plan vertical, de telle manière que la fente (36) s'étende également dans un plan vertical.

10. Dispositif selon l'une quelconque des revendications 1 à 8, **caractérisé en ce que** la première et la seconde parties de paroi (32, 34) sont entourées par une partie de paroi horizontale (68) de la paroi (30), de telle manière que la fente (36) s'étende également dans un plan horizontal.
